# EUROPEAN PATENT APPLICATION

(11) **EP 3 995 982 A1**
(43) Date of publication of application: **11.05.2022**
(21) Application number: 20205804.6
(22) Date of filing: 04.11.2020
(51) Int. Cl.: G06F 21/62, H04L 29/06

(54) **SYSTEM AND METHOD FOR STORING AND PROCESSING PERSONAL DATA**

(71) Applicant: Sistron BV, 3900 Pelt (BE)
(72) Inventor: KERSTJENS, W.O.M. (Oene), B-3900 Pelt (BE)
(74) Representative: IPLodge bv

(57) **Abstract**

The present invention discloses a system for storing and processing data pertaining to a user. The system comprises a secure environment, an application programming interface and a management application. The data is stored and processed, by one or more applications, in the secure environment. The application programming interface enables the one or more applications to send a subset of the data or processed data, derived from the data, to a third party outside the secure environment. The management application enables the user to control which subset of his data or which processed data, derived from his data, can be sent outside the secure environment.

## Description

### Field of the invention

The present invention relates to a system and a method for storing and processing user data.

### Background

The widespread adoption of personal electronic devices capable of collecting personal data, like for instance smart phones, smart watches and other wearable devices, portable computers, connected sensors and smart home appliances (sometimes referred to as the "Internet of Things", and abbreviated as "loT"), and the ever-increasing connectivity of these devices lead to the continuous generation of enormous amounts of personal data. This data offers a lot of opportunities: it can give people insight into their own behaviour, it can allow companies to better understand their customers and it can assist governments in devising, implementing and enforcing regulations.

However, aside from the above mentioned opportunities, the generation and proliferation of personal data also entails some problems.

People are more and more aware that their privacy is being eroded. In the best case, this reduced privacy leads to the offer of targeted products and services, making the lives of people easier. In the worst case, it leads to malicious usage. These concerns about eroding privacy and its possible consequences increase the resistance to the adoption of novel technology in some people and have prompted law makers to pass more stringent regulations on the use and protection of personal data. An example of such a regulation is the European Union's General Data Protection Regulation (hereinafter abbreviated as "GDPR") which entered into force on 24 May 2016 and applies since 25 May 2018.

Since the collection of large amounts of consumer data is a very recent phenomenon, many companies do not have the necessary policy, practice and infrastructure to deal with this flow of personal data. Considering this lack of experience with personal data processing, it is no wonder that many companies suffer data breaches, which can cost them customers and, under GDPR, make them liable to serious legal consequences.

There is thus a need for a system to store and manage personal data: a system which offers the user complete insight into his personal data and how it is being used and which enables third parties such as private companies or government agencies to process personal data in a safer, easier and more efficient way.

European patent application publication no. EP3447671 A1 in the name of Telefonica S. A. discloses a system for controlling the personal data of a user of a telecommunications network, comprising a database to store the user's data and a data control module to allow the user to manage access permissions to his data. However, some desirable features are still missing from the system of EP3447671A1.

In many cases, a third party is only interested in one or more parameters that can be calculated from user data, but does not need the underlying user data. A specific example is the one of road tolling: in essence, a road infrastructure operator only needs to know the price the user needs to pay for his usage of the road infrastructure. However, according to the current systems for handling personal data, the road infrastructure operator will need the data on when and where the user was driving in order to calculate the user's due amount. As such, the road infrastructure operator is fully aware of the user's whereabouts which clearly intrudes on the user's privacy. Furthermore, if the user's whereabouts are leaked, these can easily be abused for malicious intent.

Also, third parties need to be able to trust the correctness of the user data. Returning to the road-tolling example, if the user in one way or another tampers with his whereabout data, the road infrastructure operator cannot calculate the correct price for usage of the road infrastructure. Current systems for storing and managing personal data cannot guarantee the plausibility and integrity of the stored data.

There is thus a need for an improved system for storing and managing personal data.

### Summary

According to a first aspect of the invention, a system for storing and processing data pertaining to a user is provided, the system comprising:
- one or more devices for generating the data;
- a secure input interface for receiving the data;
- a secure environment for storing the data received through the input interface; the secure environment being configured to host one or more applications to process the data in the secure environment;
- a processor configured to execute one or more applications to process the data in the secure environment;
- an application programming interface of the secure environment that enables the installation of one or more applications in the secure environment; the application programming interface enabling the one or more applications to send a subset of the data and/or processed data, derived from the data, to outside the secure environment; and
- a management application that enables the user to control which subset of his data or which processed data, derived from his data, can be sent to outside the secure environment by one or more applications.

It is an advantage of the system that it allows for the secure storage of data pertaining to a user, generated by a multitude of devices, in a single secure environment.

It is an additional advantage of the system that the user has complete control over which subset of his personal data or which processed data, derived from his personal data, is communicated to third parties.

It is an additional advantage of the system that it allows the one or more applications to access all of the data in the secure environment to derive processed data and to send this processed data to outside the secure environment, without exposing or communicating the underlying data in the secure environment.

It is an additional advantage of the system that it provides a framework for the collection and/or processing of personal data across a wide range of applications while facilitating compliance with personal data and/or privacy regulations such as for instance GDPR.

In some embodiments of the system, the management application enables the user to perform one or more of:
- controlling if and when his data, generated by the one or more devices, can be received through the input interface and stored in the secure environment;
- viewing his data;
- deleting his data partially or completely;
- controlling if and when the one or more applications can be installed in the secure environment;
- controlling if and when the one or more applications can process the data in the secure environment;
- controlling if and when the one or more applications can send a subset of the data and/or processed data, derived from the data, to outside the secure environment;
- uninstalling the one or more applications from the secure environment.

It is an advantage of these embodiments that they grant the user control over which of his data is stored and give the user insight into his stored data.

It is an additional advantage of these embodiments that they grant the user control, not only over which applications are allowed to be installed in the secured environment and process and send data, but also over when these applications are allowed to be installed in the secured environment and process and send data. This gives the user a greater chance to detect malicious, unjustified or unnecessary usage of his data.

It is an additional advantage of these embodiments of the system that they further strengthen the framework for the collection and/or processing of personal data while facilitating compliance with personal data and/or privacy regulations such as for instance GDPR.

In some embodiments of the system, the one or more devices comprise a personal device of the user. Many personal devices with widespread adoption, such as for instance smartphones, smart watches and other wearable devices or notebooks, comprise a processor, storage space, various sensors and wired and/or wireless networking means and can thus be used as a device for generating data pertaining to a user.

It is an advantage of these embodiments that personal devices suitable for use in the system according to the invention are nowadays so common, accessible and widespread that the need for the installation of dedicated devices for generating user data is severely reduced, thereby possibly minimizing the capital cost, operational cost, time to market and adoption time of the system.

In some embodiments of the system, the secure environment is located in a first cloud-computing environment. Typical cloud computing environments are substantially always connected to the internet, offer on-demand scalable processing power and storage space, employ redundant storage and feature state-of-the art data protection techniques and protocols.

It is an advantage of these embodiments that cloud-computing environments suitable for use in the system according to the invention are nowadays so common, accessible and widespread that there is little or no need for the installation of dedicated servers for hosting the secure environment and storing user data, thereby possibly minimizing the capital cost, operational cost, time to market and adoption time of the system.

In some embodiments of the system, the data is stored in the secure environment under encrypted form.

It is an advantage of these embodiments that, even in the event of a data breach, the user's data cannot be read by non-authorized third parties.

In some embodiments of the system, the management application is configured to verify a certification of the one or more applications and to only allow the installation and/or execution of the one or more applications if a predetermined certification criterion is met.

It is an advantage of these embodiments that malicious applications can be stopped before they are installed and/or executed, even when the user allows their installation and/or execution.

In some embodiments of the system, the system comprises an interface to a second cloud computing environment for the storage of an anonymized non-modifiable copy of a record of the data pertaining to a user.

It is an advantage of these embodiments that the non-modifiable copy cannot be tampered with and can be used to check the integrity and plausibility of the data pertaining to the user.

It is an additional advantage of these embodiments that the non-modifiable copy is anonymized and hence does not fall under personal data and/or privacy regulations.

It is an additional advantage of these embodiments that the non-modifiable copy is anonymized and hence does not raise privacy concerns with the user.

It is an additional advantage of these embodiments that the non-modifiable copy can be used as a back-up in the case of data loss.

In some embodiments of the system, the system comprises means to allow one or more external devices to collect a subset of the data pertaining to the user, and/or processed data, derived from the data pertaining to the user, when the user is located within a predetermined distance of the one or more external devices. External devices comprise all devices that are not personal devices of the user, including but not limited to personal devices of a second user and infrastructure devices.

It is an advantage of these embodiments that they allow external devices to obtain data pertaining to the user.

In some embodiments of the system, the system comprises means to communicate a subset of the data pertaining to the user, and/or processed data, derived from the data pertaining to the user, to one or more external devices when the user is located within a predetermined distance of the one or more external devices. External devices comprise all devices that are not personal devices of the user, including but not limited to personal devices of a second user and infrastructure devices.

It is an advantage of these embodiments that they allow external devices to obtain data pertaining to the user.

According to a second aspect of the invention, a method for storing and processing data pertaining to a user is provided, the method comprising:
- collecting data pertaining to a user;
- storing the data in a secure environment;
- executing one or more applications to process the data in the secure environment
- providing an application programming interface of the secure environment to enable the one or more applications to be installed in the secure environment, to enable the one or more applications to send a subset of the data and/or processed data, derived from the data, to outside the secure environment; and
- providing a management application enabling the user to control which subset of his data and/or which processed data, derived from his data can be sent to outside the secure environment by the one or more applications.

The technical effects and advantages of embodiments of the method according to the present invention correspond, mutatis mutandis, to those of the corresponding embodiments of the system according to the present invention.

In some embodiments of the method, the management application enables the user to perform one or more of:
- controlling if and when his data can be stored in the secure environment;
- viewing his data;
- controlling if and when the one or more applications can be installed in the secure environment;
- controlling if and when the one or more applications can process the data in the secure environment;
- controlling if and when the one or more applications can send a subset of the data and/or processed data, derived from the data, to outside the secure environment;
- uninstalling the one or more applications from the secure environment.

In some embodiments of the method, the collecting of the data is done by a personal device of the user. Many personal devices with widespread adoption, such as for instance smartphones, smart watches and other wearable devices or notebooks, comprise a processor, storage space, various sensors and wired and/or wireless networking means and can thus be used as a device for collecting data pertaining to a user.

In some embodiments of the method, the secure environment is located in a first cloud-computing environment. Typical cloud computing environments are substantially always connected to the internet, offer on-demand scalable processing power and storage space, employ redundant storage and feature state-of-the art data protection techniques and protocols.

In some embodiments of the method, the data is stored in encrypted form in the secure environment and only the user knows the corresponding decryption key.

In some embodiments of the method, the installation and execution of the one or more applications in the secure environment are prevented if the one or more applications do not meet a predetermined certification criterion.

In some embodiments of the method, an anonymized non-modifiable copy of a record of the data is stored in a second cloud-computing environment and the address of the anonymized non-modifiable copy is appended to the record of the data.

In some embodiments of the method wherein an anonymized non-modifiable copy of a record of the data is stored in a second cloud-computing environment and the address of the anonymized non-modifiable copy is appended to the record of the data, the one or more applications can compare the record of the data to the anonymized non-modifiable copy of the record.

In some embodiments wherein an anonymized non-modifiable copy of a record of the data is stored in a second cloud-computing environment, the one or more applications can compare the record of the data to the anonymized non-modifiable copies of one or more other records. These anonymized non-modifiable copies of one or more other records do not necessarily comprise the same data type as the record of the data. These anonymized non-modifiable copies of one or more other records do not necessarily comprise data pertaining to the user; for instance, they may comprise data pertaining to one or more other users.

In some embodiments of the method wherein an anonymized non-modifiable copy of a record of the data is stored in a second cloud-computing environment and the address of the anonymized non-modifiable copy is appended to the record of the data, the anonymized non-modifiable copies can be made available to a third party without consent of said user.

It is an additional advantage of these embodiments that third parties can get access to large data sets without violating personal data and/or privacy regulations and without raising privacy concerns.

In some embodiments of the method, an enforcement provider can compare one or more records of the data pertaining to said user, these one or more records being collected by one or more external devices for the time period during which the user is located within a predetermined distance of the one or more external devices, with data generated by the external devices.

In some embodiments of the method, an enforcement provider can compare one or more records of the data pertaining to said user, these one or more records being communicated to one or more external devices for the time period during which the user is located within a predetermined distance of the one or more external devices, with data generated by the external devices.

It is an advantage of these embodiments that communication of data by vehicles to other vehicles and roadside infrastructure suitable for use in the system according to the invention are becoming nowadays more common through the introduction of vehicle-to-vehicle and vehicle-to-roadside communication technologies such as Wifi-P or CV2X, becoming accessible and widespread so that there will be little or no need for dedicated communication.

In some embodiments of the method, an enforcement provider can make use of means to detect a user. These means might comprise one or more sensors, such as for instance a camera.

It is an advantage of these embodiments that the enforcement provider can detect when a user is using the infrastructure without the one or more devices for generating data.

Some embodiments of the method are adapted to allow the user to access a service provided by a service provider, in that the user is required to grant an application of the service provider permission to be installed in the secure environment, to execute in the secure environment and to send a service-specific subset of the data and/or service-specific processed data, derived from the data, to the service provider.

It is an advantage of these embodiments that the service provider is guaranteed to receive the required service-specific data.

It is an additional advantage of these embodiments that the user knows exactly which service-specific subset of his data and/or which service-specific processed data, derived from his data, will be communicated to the service provider.

It is an additional advantage of these embodiments that the service provider has no insight into the user's data, except for the service-specific subset of the user's data and/or the service-specific processed data, derived from the user's data.

Some embodiments of the method, wherein an enforcement provider can compare one or more records of the data pertaining to the user, these one or more records being communicated to one or more external devices for the time period during which the user is located within a predetermined distance of the one or more external devices, with data generated by the external devices, are adapted to allow submission of the user to an enforcement policy. In these embodiments, the user is required to grant one or more of his personal devices permission to send an enforcement-specific subset of his data and/or enforcement-specific processed data, derived from his data, to external devices.

Some embodiments of the method, wherein an enforcement provider can compare one or more records of the data pertaining to the user, these one or more records being collected by one or more external devices for the time period during which the user is located within a predetermined distance of the one or more external devices, with data generated by the external devices, are adapted to allow submission of the user to an enforcement policy. In these embodiments, the user is required to grant the external devices permission to collect an enforcement-specific subset of his data and/or enforcement-specific processed data.

It is an additional advantage of these embodiments that the enforcement provider can act on behalf of multiple service providers and deliver the required service-specific data to each of the service providers, without the service providers needing to be concerned with the method of obtaining the required service-specific data.

It is an additional advantage of these embodiments that the enforcement provider can act on behalf of a government agency and deliver legally required data about the user to the government agency, without the government agency needing to be concerned with the method of obtaining the legally required data.

According to another aspect of the invention, the use of the system according to the invention is provided for one or more of the following applications:
- contact tracing;
- ecological-footprint-based mobility pricing;
- identification of possible crime suspects;
- enforcement of contractual agreements;
- electronic governance or e-governance, such as calculation of tax rates, tax incentives and benefits;
- processing data generated by loT devices, such as smart metering.

The technical effects and advantages of embodiments of the use of the system according to the present invention correspond, mutatis mutandis, to those of the corresponding embodiments of the system according to the present invention.

### Brief description of drawings

- **Fig. 1 (a)****-(c)** schematically illustrates an embodiment of the system of the present invention.
- **Fig. 2** schematically illustrates how a service provider can use the method of the present invention.
- **Fig. 3** schematically illustrates an embodiment of the system comprising an interface to a second cloud computing environment.
- **Fig. 4** schematically illustrates an embodiment of the system comprising external devices.
- **Fig. 5** schematically illustrates how an enforcement provider can use the method of the present invention.
- **Fig. 6 (a)****-(b)** schematically illustrate the use of the method of the present invention for road-mobility applications.
- **Fig. 7(a)****-(b)** schematically illustrate the use of the present invention for a contact tracing application.
- **Fig. 8** schematically illustrates the use of the present invention for the tracing of possible crime suspects.
- **Fig. 9** schematically illustrates the use of the present invention for tax rate calculations.
- **Fig. 10** schematically illustrates the use of the present invention for smart metering of utilities consumption.
- **Fig. 11** schematically illustrates the use of the present invention for the enforcement of business-to-business contract agreements.

### Detailed description

The present disclosure will be described in terms of specific embodiments, which are illustrative of the disclosure and which are not to be construed as limiting. It will be appreciated that the present disclosure is not limited by what has been particularly shown and/or described and that alternatives or modified embodiments could be developed in the light of the overall teaching of this disclosure. The drawings described are only schematic and are non-limiting.

Reference throughout this description to "one embodiment" or "an embodiment" means that a particular feature, structure or characteristic described in connection with the embodiments is included in one or more embodiment of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Throughout this description, the term "user" refers to a natural or legal person who uses the system or method of the present invention to store and eventually process data pertaining to himself. The term "user" may also refer to a natural or legal person who accepts and enables the usage of one or more of his personal devices by the system or method of the present invention, with or without using the system or method of the present invention to store and eventually process data pertaining to himself. The term "service provider" refers to a natural or legal person who offers services that are available for users of the present system or method. The term "enforcement provider" refers to a natural or legal person who offers the service to service providers of ensuring the plausibility and integrity of the data they receive from the user. The term "framework provider" refers to a natural or legal person who owns, runs or maintains the system according to the invention.

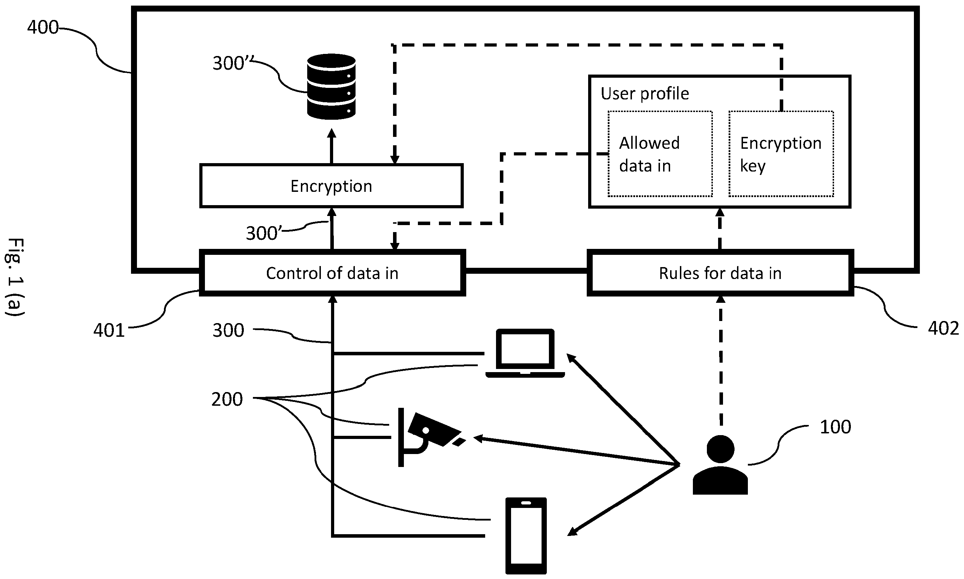

**Fig. 1 (a)****-(c)** schematically illustrate an embodiment of the system for storing and processing personal data pertaining to a user, according to the present disclosure. In these illustrations, solid arrows represent the flow of data, dashed arrows represent the flow of user control and dash-dotted arrows represent the installation of applications.

**Fig. 1 (a)** schematically illustrates data storage by the embodiment of the system. One or more devices **200** generate data **300** pertaining to the user **100.** These devices **200** may comprise personal devices of the user, including but not limited to examples such as a smart phone, smart watch, portable computer or onboard computer of a personal vehicle. These devices 200 may also comprise external devices, including but not limited to personal devices of a second user or devices belonging to a service provider, infrastructure operator, enforcement provider or government agency. Specific examples are given further in this document.

The data **300** pertaining to the user **100** can be generated by the devices **200** using various sensors, measurement and data mining techniques, including but not limited to clocks, GPS receivers, file readers or algorithms. The data **300** pertaining to the user **100** may comprise personal data, wherein personal data is defined, according to GDPR, as any information that relates to an identified or identifiable living individual.

Once the data **300** is generated, it is transferred by means of a secure input interface **401** to a secure environment **400** where it is stored. The data **300** can be transferred by an appropriate data network. At the physical and data link layer, the data network may comprise, as the skilled person will appreciate, any suitable combination of segments implemented according to various data networking standards, including for example wired or wireless personal area networks, such as USB, IEEE Std 802.15.1 and .2 ("Bluetooth"), and IEEE Std. 802.15.4 ("Zigbee"); wired or wireless local area networks such as IEEE Std 802.3 ("Ethernet") and IEEE Std 802.11 ("WiFi"); mobile networks such as GSM/EDGE/GPRS, 3G, 4G and beyond; along with any bridging equipment that may be suitable to bridge between segments. At the transport and network layer, the data network may use the TCP/IP protocol family. The data **300** can be temporarily stored or cached on the devices **200** to ensure that it does not get lost or corrupted if the devices **200** cannot connect to the secure environment **400** through the interface **401,** if the connection is lost during data transfer or if the rate of data generation exceeds the transmission rate. Preferably, the secure input interface **401** comprises means to communicate the successful transfer and storage of data **300** to the devices **200.** Preferably, the devices **200** erase the data **300** that they stored or cached after receiving the confirmation of successful data transfer and storage from the secure input interface **401.**

The term "secure input interface" implies that during transmission of the data **300** from the devices **200** to the secure environment **400,** appropriate techniques and protocols are used such that non-authorized third parties cannot tamper with the data **300** being transferred. In addition to maintaining the secrecy of the data being transferred (encryption), these techniques and protocols may for example provide one or more of authenticity (e.g. by using message authentication codes), non-repudiation (e.g. by using electronic signatures), detection of message loss (e.g. by using message counters), and the like. The skilled person is well aware of the appropriate techniques and protocols that can be implemented to ensure secure data transmission. Examples of protocols from the TCP/IP protocol family that can be used in this context include, but are not limited to, the TLS and SSL protocols.

The term "secure environment" indicates a digital environment for the persistent and redundant storage of data, wherein non-authorized third parties cannot access, copy, read or modify the data being stored. The skilled person is well aware of the appropriate techniques and protocols that can be implemented to ensure secure data storage. The secure environment **400** can be located on various physical devices, including but not limited to a personal device of the user, a dedicated server or in a cloud computing environment. Preferably, the secure environment **400** exists on more than one physical device for reasons of redundancy and is synced across these devices. Preferably, the secure environment **400** is connected to the internet. Preferably, the secure environment **400** offers scalable storage space. The user **100** remains the owner of his data **300,** even when he is not the owner of the physical device on which the secure environment containing his data is located.

In the embodiment of **Fig. 1 (a)****,** the user **100** can control, by means of a management application **402,** which data, generated by the devices **200,** can be received by the secure input interface **401** and stored in the secure environment **400.** The data **300'** received by the secure input interface **401** is thus not necessarily equal to the data **300** generated by the devices **200,** but can be a subset of the data **300.** Preferably, the user's settings are stored in a user profile in the secure environment **400.** Preferably, the management application **402** employs appropriate means such that non-authorized third parties cannot modify the user's settings. Such means might comprise single factor or multi-factor authentication methods. Preferably, the user **100** has, through the management application **402,** complete insight into his own data.

In the embodiment of **Fig. 1 (a)****,** the data **300'** is encrypted before it is stored in the secure environment as encrypted data **300".** Preferably, the used encryption key and the corresponding decryption key are stored in the user profile in the secure environment **400.**

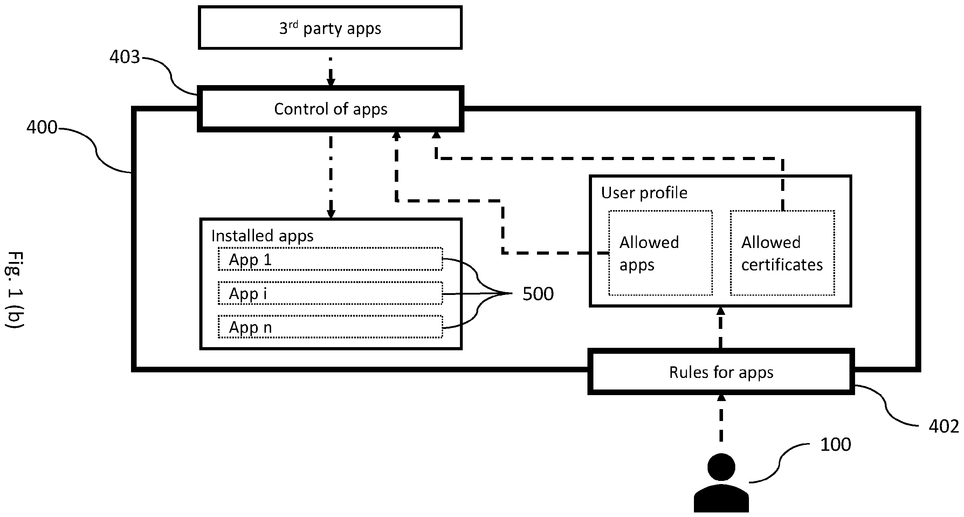

**Fig. 1(b)** schematically illustrates the installation of one or more applications **500** (abbreviated as "apps" in the figures for the sake of brevity) by the embodiment of the system. The secure environment **400** comprises an application programming interface **403** (hereinafter sometimes abbreviated as "API") that enables the installation of one or more software applications **500** in the secure environment **400.** These applications may be offered by third parties, including but not limited to service providers, infrastructure operators, enforcement operators, government agency or natural persons. The applications **500** may be available on demand through various distribution platforms, including but not limited to downloads from an application repository or downloads from an application-specific website. When the user **100** requests a specific service, he may be prompted to install a service-specific application **500.** When the user **100** requests a specific service, he may be obliged to install a service-specific application **500** in order to use the requested service. The user **100** may be legally obliged to install government-issued applications. Examples of service-specific applications are given further in this document.

The user **100** can control, by means of the management application **402,** which applications **500** can be installed in the secure environment **400.** Preferably, these user settings are stored in the user profile in the secure environment **400.** If an non-authorized application attempts to install itself in the secure environment **400,** the API **403** will block the installation process of the specific application. Preferably, the user **100** receives a warning when a non-authorized application attempts to install itself in the secure environment **400.** Preferably, the user **100** can, by means of the management application **402,** uninstall installed applications from the secure environment **400.**

In the embodiment of **Fig. 1 (b)****,** the user **100** can control, by means of the management application **402,** whether an application **500** should meet a predetermined certification criterion before it is allowed to install in the secure environment **400.** Issuing certificates can be a convenient way to separate secure applications from unsecure or malicious applications. A malicious application might for instance attempt to communicate data pertaining to the user to other parties than it discloses. These certificates may be issued by various third parties, including but not limited to government agencies, private companies or consumer groups. If a non-certified application attempts to install itself in the secure environment **400,** the management application **402** will block the installation process of the specific application. Preferably, the user **100** receives a warning when a non-certified application attempts to install itself in the secure environment **400.** If the user attempts to install an non-certified application in the secure environment **400,** the API **403** will block the installation process of the specific application. Preferably, the user **100** receives a warning when he tries to install non-certified application in the secure environment **400.**

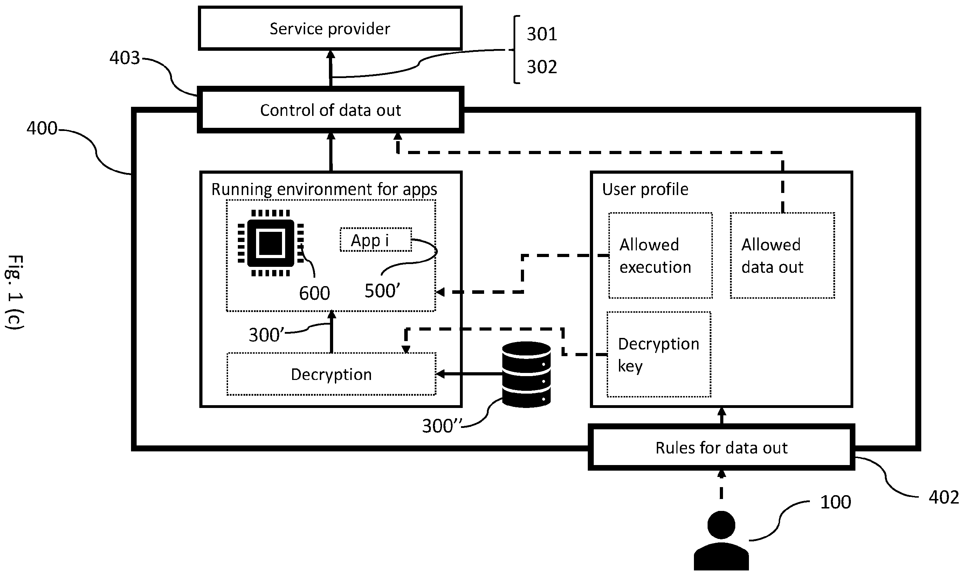

The secure environment **400** is configured to host the applications **500** to process the data **300'** in the secure environment **400.** **Fig. 1 (c)** schematically illustrates the execution of one application **500'** by the embodiment of the system. An application **500** can only be executed in the secure environment **400** after it has been installed in the secure environment **400.** The user **100** can control, by means of the management application **402,** which applications **500** are allowed to execute. Preferably, the user **100** receives a warning when a non-authorized application attempts to execute in the secure environment **400.** Preferably, the user **100** can also control, by means of the management application **402,** when applications **500** are allowed to execute. Preferably, the user **100** receives a warning when an application attempts to execute in the secure environment **400** at a non-authorized moment.

Preferably, the secure environment **400** is configured to be capable of hosting more than one application **500** simultaneously. Preferably, an application **500'** being executed in the secure environment **400** can read all data **300'** in the secure environment **400** and can write data to the secure environment **400** but cannot delete or modify data in the secure environment **400.** The skilled person is aware of appropriate techniques for controlling the behaviour of applications, such as for example the usage of a temporary running environment, such as a container or virtual machine, inside the secure environment **400.**

In the embodiment of **Fig. 1 (c)****,** the encrypted data **300"** has to be decrypted to the un-encrypted data **300'** before the running application **500'** can read and process it. Preferably, this decryption process happens inside the temporary running environment such that the decrypted data **300'** is not exposed to other applications **500.** Preferably, this decryption uses a key stored in the user profile, which may be the same key that was used for encryption (this would be the case if a symmetric encryption algorithm is used) or a separate, private key (this would be the case if a public key encryption algorithm is used).

The system comprises a processor **600** configured to execute the applications **500** in the secure environment **400.** The term "processor" is not meant to limit this element to a component commercially known as a microprocessor. The processor **600** can include any suitable hardware, including but not limited to a CPU, a suitably configured FPGA, an ASIC, or a combination of such components. The processor can be mounted in various physical devices, including but not limited to a personal device of the user, a dedicated server or in a cloud computing environment. Preferably, the processor **600** is mounted in a physical device that hosts the secure environment **400.** Preferably, the processor **600** is mounted in a physical device that is connected to the internet. Preferably, the system offers scalable processing power.

The applications **500** are configured to, upon runtime, select a subset **301** of the data **300'** and/or generate processed data **302,** based on the data **300'** and to attempt to communicate this subset **301** or this processed data **302** to a third party outside the secure environment **400** through the API **403.** The subset **301** or the processed data **302** comprise service-specific data. During transmission of the subset or the processed data from the secure environment **400** to outside the secure environment **400** through the API **403,** appropriate techniques and protocols are used such that no one, except for the intended receivers, can intercept, copy or read the data being transferred and such that no one can modify the data being transferred. The intended receivers may comprise service operators, enforcement operators or government or law enforcement agencies. The subset **301** or the processed data **302** comprise service-specific data. Examples of third parties and service-specific data are given further in this document.

The user **100** can control, by means of the management application **402,** which subset **301** of his data **300'** or which processed data **302,** derived from his data **300',** can be sent to outside the secure environment **400** by the one or more applications **500** installed in the secure environment **400.** If an application **500** attempts to send non-authorized data outside the secure environment, the management application **402** will block the transmission of this non-authorized data. Preferably, the user **100** receives a warning when an application attempts to send non-authorized data outside the secure environment **400.** Preferably, the user **100** can control, by means of the management application **402,** when a subset **301** of his data **300'** or when processed data **302,** derived from his data **300',** can be sent to outside the secure environment **400** by the one or more applications **500** installed in the secure environment **400.** If an application **500** attempts to send data outside the secure environment at a non-authorized moment, the management application **402** will block the transmission of this data. Preferably, the user **100** receives a warning when an application attempts to send data outside the secure environment **400** at a non-authorized moment.

The provider(s) of the framework, comprising the secure environment **400,** the secure input interface **401,** the management application **402** and the API **403** do not have insight in the data **300.** The owner(s) - other than the user **100** - of the physical device(s) on which the data is stored do not have insight in the data **300.** The owner(s) - other than the user **100** of the physical device(s) on which the data is processed do not have insight in the data **300.**

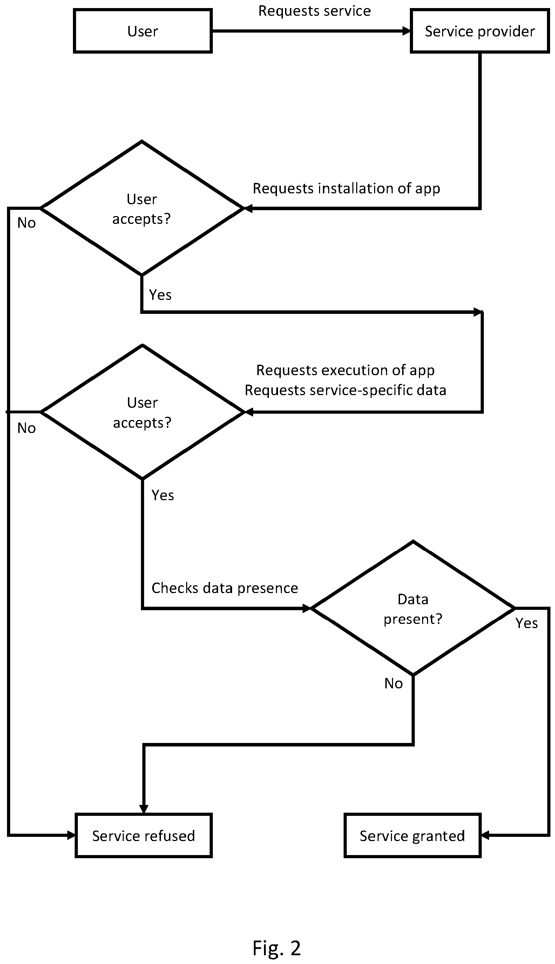

Some embodiments of the method of the present invention are particularly suited for the exchange of a user's personal data with a service provider delivering a service to the user. The flow chart in **Fig. 2** illustrates such an embodiment.
When a user wants to access a service provided by a service provider, this service provider first requests that the user allows the application of the service provider to be installed in his secure environment by means of the API, at least if the application hasn't been installed yet. If the user does not agree with installing the application, the service provider refuses the user access to the service. Preferably, the application of the service provider is certified according to a widely known and trusted certification standard.

Once the application has been installed, the service provider will request the user to grant the application the right to execute in the user's secure environment and to send a service-specific subset of the user's data or service-specific processed data, derived from the user's data, to the service provider. The service provider gives exact specifications for the service-specific data to be communicated. If the user does not approve the execution of the application and the communication of the service-specific data, the service provider refuses the user access to the service. Preferably, the user can save his preferred allowances for a specific application and/or a specific service provider in the management application.

After the user has given his necessary approval, the application of the service provider checks whether the required data records, necessary for the service-specific data subset or the calculation of the service-specific processed data, are actually present in the user's secure environment. Preferably, in case the required data records are not present in the secure environment, the user is prompted by the application to allow a suitable device to send data to the secure environment through the secure input interface. If the user refuses to do so, the service provider refuses the user access to the service.

If the user has granted the necessary permissions, the service provider grants him access to the requested service. The service provider's application runs in the secure environment for the time the user is using the service and communicates the service-specific data to the service provider through the API. While the application has access to all of the data in the user's secure environment, only the service-specific data leaves the secure environment and is communicated to the service provider. This mode of operation presents important advantages, which will be illustrated further in this text by means of specific examples.

Preferably, the application of the service provider automatically stops executing in the secure environment and stops communicating service-specific data to the service provider once the user or the service provider indicates that the user is no longer using the service. The user is capable of manually interrupting the execution of the application and the transmission of service-specific data.

While this embodiment of the method according to the invention presents many advantages, the service provider is not certain of receiving correct data from the user. Indeed, in many cases the service-specific data will be used to bill the user and the user will have an incentive to tamper with his data, for instance by partially or completely deleting service-specific data, by only allowing the collection of incomplete data by his personal devices or by manipulating the data generated by his personal device. The following embodiments of the system and method address this concern.

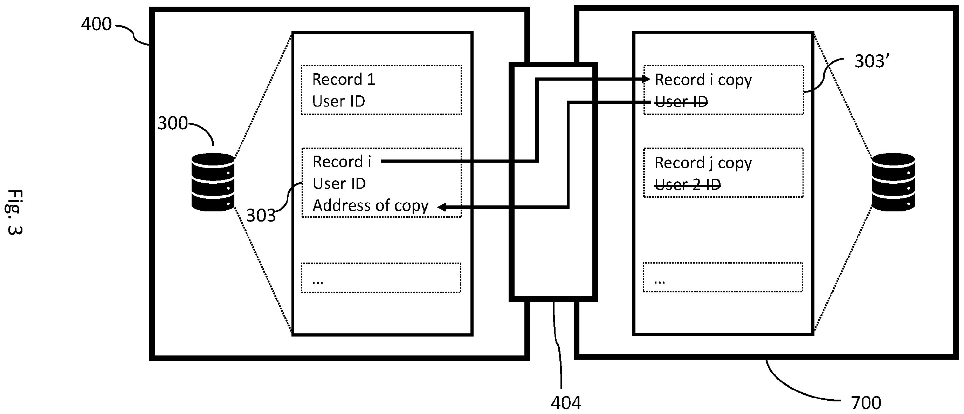

**Fig. 3** schematically illustrates an embodiment of the system comprising an interface to a second cloud computing environment. The interface **404** connects the secure environment **400** to a second cloud computing environment **700.** Preferably, the interface **404** is a secure interface, where the term "secure interface" has the interpretation described above.

In an embodiment according to the method of the present invention, the interface **404** is used to transfer a copy **303'** of a data record **303** of the data **300** stored in the secure environment **400** to the second cloud computing environment **700** and to store the copy **303'** in this environment **700.** The copy **303'** is anonymized, implying that the copy **303'** cannot be related to the user. The copy **303'** is non-modifiable and is created at substantially the same moment as the original record **303.** The address of the copy **303'** is added to the record **303.**

The anonymized copy **303'** can be used as a backup in case the record **303** is deleted or damaged.

Preferably, the applications **500** installed in the secure environment can, upon runtime, compare the record **303** to its anonymized copy **303'.** In this way, the applications **500** can verify the integrity of the record **303.**

For instance, if the user attempts to delete service-specific data partially or completely from his secure environment during the usage of the corresponding service - either erroneously or with malicious intent - a comparison to the anonymized copy can reveal that the user is tampering with his data and can reveal the correct values of the incomplete or missing data. For this purpose, it is preferable when the addresses of the anonymized copies, as stored in the secure environment, cannot be deleted by the user. Examples of using anonymized data to detect and circumvent data tampering by the user are given further in this document

Preferably, the anonymized non-modifiable copies in the second cloud computing environment can be made available to a third party without consent of the user. Since the anonymized non-modifiable copies cannot be related to the user without access to the corresponding addresses in the user's secure environment, the anonymized copies do not comprise personal data and their proliferation is not subject to personal data and/or privacy regulations. Preferably, the second cloud computing environment stores the anonymized non-modifiable copies of the data of all users. The anonymized non-modifiable copies of the user data of all the users of a service comprise a very valuable dataset for the service provider offering the service. The data in this dataset may help the service provider in understanding his clients, improving his service or taking business decisions. A specific example of the usage of the anonymized data by a service provider is given further in this document.

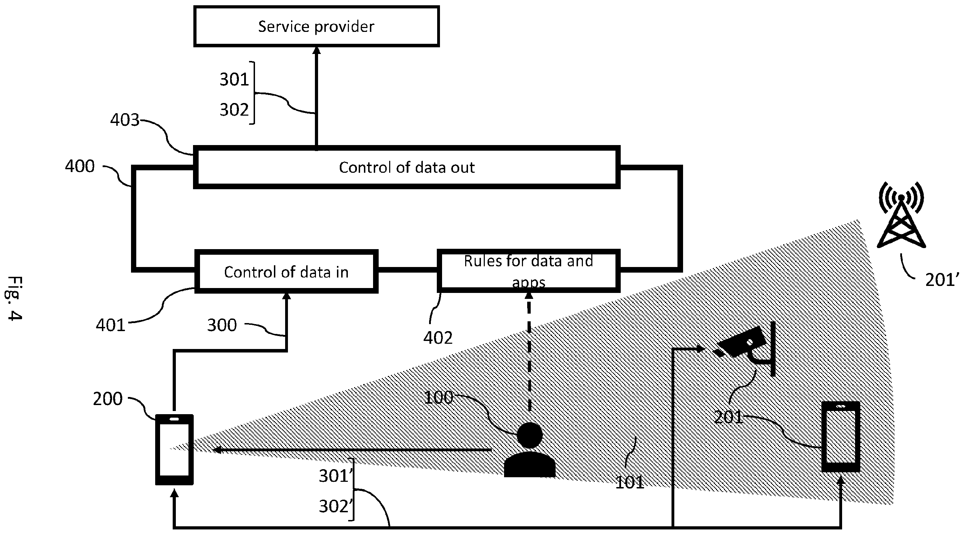

**Fig. 4** schematically illustrates another embodiment of the system that is suitable for ensuring the completeness and integrity of the data delivered to the service provider. In the embodiment of **Fig. 4****,** the device **200** communicates with external devices **201** through an appropriate data network. Preferably, the communication between the device 200 and the external devices 201 comprises wireless communication. The employed data network may be the same as the one involved in the communication between the device 200 and the secure input interface 401. Preferably, the employed data network offers bidirectional communication, meaning that both the device 200 and the external devices 201 can send and receive information to and from each other. Preferably, the external devices 201 are equipped with various networking means in order to ensure compatibility of communication with a variety of different devices.

Through the employed data network, the device **200** can exchange a subset **301'** of the generated user data **300** and/or processed data **302',** derived from the generated data **300,** with external devices **201** that are within a predetermined range **101** of the device **200** currently generating the data for the secure environment. Preferably, the predetermined range **101** is smaller than 1000, 500, 200, 100 m. Preferably, the predetermined range **101** is larger than 5, 10, 20, 50 m. The external devices **201** can be personal devices of other users or infrastructure devices belonging to a service provider, the framework provider, an enforcement provider or a government agency. The communication means cannot exchange any data with a device **201'** that is outside of the predetermined range **101.**

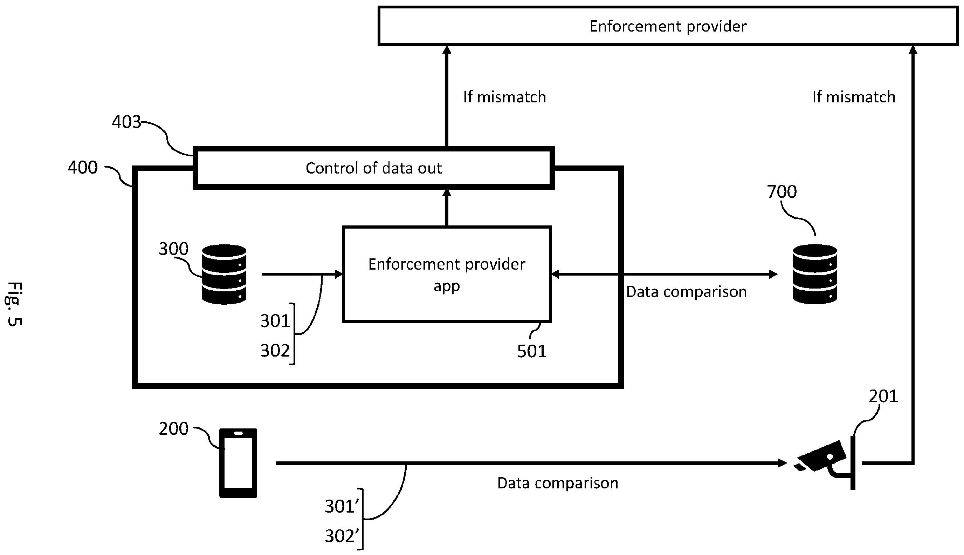

**Fig. 5** schematically illustrates how an enforcement provider can leverage the embodiments of the system described in connection with **Fig. 3** and **Fig. 4** to ensure the plausibility and integrity of the data being delivered to the service provider.

When the user request to use a service provided by a service provider, the user is required to accept the installation of the service provider's application **500** in his secure environment **400,** as well as the execution of the service provider's application and the communication of the data subset **301** and/or processed data **302** to the service provider. This process has been described in the context of **Fig. 2** and is not shown in **Fig. 5****.**

In the embodiment of **Fig. 5****,** additionally, the user is required to accept the installation of an enforcement provider's application **501** in his secure environment **400,** as well as the execution of the enforcement provider's application **501** and the broadcasting of an enforcement-specific subset of data **301'** or enforcement-specific processed data **302'** by means of the local device **200** generating the user data. The enforcement-specific subset **301'** and enforcement-specific processed data **302'** are thus sent outside the scope of the secure environment **400.** The enforcement-specific data **301'** and **302'** is received by the external devices **201** that are within a predetermined distance of the device **200.** Ideally, the location of the user corresponds to the location of the device **200** generating data pertaining to the user.

Preferably, the enforcement-specific data **301'** and **302'** does not comprise any other data pertaining to the user than the data that could be observed by a natural person or a sensor within the predetermined distance of the user. In this case, the broadcasting of the enforcement-specific data **301'** and **302'** does not endanger the privacy of the user and does not violate privacy and/or personal data regulations. Preferably, the enforcement-specific data **301'** and **302'** comprises the identification of the user. Preferably, the enforcement-specific data **301'** and **302'** comprises the geographical location of the user, within a predetermined accuracy range, as well as the corresponding time at which the user is in that specific geographical location. Examples of enforcement-specific data are given further in this document.

The external devices **201** compare the received enforcement-specific data **301'** and **302'** with the corresponding data generated by themselves. If both datasets match according to a criterion, predetermined by the enforcement operator, the external devices **201** preferably discard the user data **301'** and **302'.** If both datasets do not match according to the criterion, the external devices **201** inform the enforcement provider that the user has tampered with his data. The enforcement provider can in turn take additional measures or eventually inform the service provider of infrastructure operator.

Preferably, the external devices 201 are equipped with means to detect the presence of users within a predetermined distance range, also when no enforcement-specific data **301'** and/or **302'** is being received from these users. Such absence of enforcement-specific data **301'** and/or **302'** can trigger external device **201** to inform the enforcement provider that a user is using the service or infrastructure although not providing enforcement-specific data **301'** and/or **302'.**

An illustrative example of the above is the case of an external device **201** equipped with a camera that detects a vehicle driving by on a toll road without broadcasting enforcement-specific data **301'** and/or **302'.** Preferably the enforcement provider provides the licence plate number of said the detected vehicle as communicated to the enforcement provider by external device **201** to an appropriate entity such as the service provider or government agency for further measures.

The embodiment of this method allows to enforce the use of operational and active devices **200** by all users and to the appropriate entity to take further measures in case there are users without operational device **200.** The advantage of the described method with respect to existing enforcement methods is that the enforcement provider only has to take further measures in case enforcement-specific data **301'** and/or **302'** is absent.

Furthermore, during the execution of the service provider's application **500,** the enforcement provider application **501** is also running in the secure environment of the user. Preferably, the enforcement provider application **501** compares the records of the required service-specific data **301** and/or **302** to the corresponding anonymized non-modifiable records stored in the second cloud computing environment **700** according to a criterion predetermined by the enforcement provider. This comparison can happen periodically at predetermined instants or at random instants. Preferably, the comparison can also be initiated by a signal from the external devices **201** if the external devices detect **201** a mismatch between the broadcasted enforcement-specific data **301'** and **302'** and the corresponding data generated by themselves.

If the enforcement provider application **501** detects a match between the service-specific data **301** and/or **302** and the corresponding anonymized non-modifiable records stored in the second cloud computing environment **700,** the application **501** does not undertake any action. If on the other hand, the enforcement provider application **501** detects a mismatch between the service-specific data **301** and/or **302** and the corresponding anonymized non-modifiable records stored in the second cloud computing environment **700,** the application **501** informs the enforcement provider who can take further measures.

The embodiment of the method described in the context of **Fig. 5** thus provides two independent, complementary ways of detecting data tampering by a user, without exposing non-authorized data of the user to non-authorized third parties. This embodiment is independent of the service being used or of the service provider, with the possible exception of the contents of the enforcement-specific data **301'** and **302'.** One enforcement provider can thus serve many service providers and there is no need for the service providers to invest in methods of ensuring the plausibility and integrity of the user's data.

Since the enforcement-specific data **301'** and **302'** preferably comprises the identification of the user, his location and the corresponding timestamp, the same external devices **201** can serve for the enforcement for many different services. Since the external devices **201** comprise the personal devices of all the users of the system and method, there is little need for the enforcement provider to invest in additional external devices. One enforcement provider can thus serve many service providers with a limited infrastructure investment.

The following example illustrates the application of the system and method of the invention to the specific example of road mobility.

In the hope of curbing traffic congestion and decreasing pollution by road vehicle's exhaust gasses, more and more governments wish to implement a road tolling scheme, where users pay a variable toll fee based on factors such as the distance driven, the trajectory driven, the time of day and the emission rate of the user's vehicles. The implementation of such a tolling scheme requires a very large infrastructure investment for the installation of numerous toll booths and/or vehicle monitoring cameras.

Likewise, many cities wish to implement a geofencing strategy, where certain kinds of vehicles have different access rights to different districts. In Europe, multiple cities feature so-called low-emission zones in their city centres, where vehicles with emissions above a certain threshold are not allowed at the penalty of a fine. The enforcement of these low-emission zones requires a large infrastructure investment for the installation of numerous vehicle monitoring cameras.

On a related note, speeding endangers everyone on the road and is still the cause of a large percentage of traffic-related deaths. Currently, drivers exceeding the speed limit are caught by speed cameras. However, the installation of these cameras again comes with a large infrastructure cost and drivers quickly learn where these cameras are located.

Finally, the cost of car insurance is currently based on the type of vehicle, the amount of past accidents of the driver and the driver's age and gender. The distance driven, the time of day at which the driver drives the car, the duration of uninterrupted driving and the driver's driving style are not taken into account, whereas these are a major indicator for the driver's accident risk. However, at the moment, insurance companies do not have access to this kind of data.

The system and method of the invention enable intelligent tolling, geofencing, speed limit enforcement and car insurance price calculation without the aforementioned disadvantages.

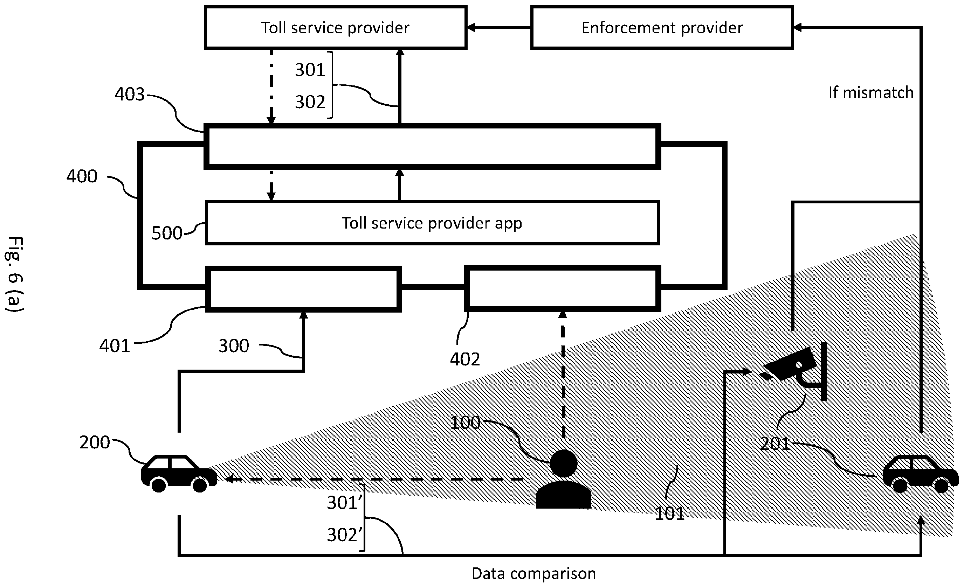

**Fig. 6 (a)****-(b)** schematically illustrate this specific example, where a user **100** wants to drive a vehicle, such as for instance a car, over a road infrastructure operated by a road infrastructure provider. According to the method of the present invention, the service provider providing a service that enables the user to drive on the road operated by the road infrastructure provider (such as an electronic toll service provider) will impose conditions on the user **100** before the user **100** can access the road infrastructure. These conditions are schematically drawn in **Fig. 6 (a)** and comprise the following four demands:
- The demand that the user **100** accepts the installation of the road infrastructure provider's application **500** in the user's secure environment **400.** This installation takes place through the API **403.**
- The demand that the user **100** accepts that a device **200** collects data **300** pertaining to the user, where in the case of road mobility the data **300** comprises at least an ID of the user, the licence plate of the vehicle that will be used, the location of the device **200** and the corresponding timestamps. The device **200** can be for instance the mobile phone of the user or the on-board computer of the vehicle.
- The demand that the service provider's application **500** is allowed to send a subset **301** of the user's data or processed data **302,** derived from the user's data to the service provider. In the case of road mobility, the data sent to the provider could comprise at least the price that the user **100** needs to pay for his usage of the infrastructure.
- The demand that the user **100** accepts the execution of the enforcement provider's application in the secure environment **400.**
- The demand that the device **200** is allowed to broadcast an enforcement-specific subset **301'** of the user's data or enforcement-specific processed data **302',** derived from the user's data to external devices **201** that are within a predetermined distance **101** of the device **200.** These external devices can be for instance the on-board computers of other vehicles also using the system according to the invention, infrastructure devices like speeding or licence plate cameras or mobile phones of bystanders who use the system according to the invention. In the case of road mobility, the enforcement-specific data comprises at least an ID of the user, the licence plate of the vehicle that will be used, the location of the device **200,** the corresponding timestamps and information on whether the user **100** has tampered with his data **300.**

Once the conditions above are met, the infrastructure provider grants the user access to the road network with his vehicle. Based on the data in the secure environment, the road toll service provider's application **500** can calculate not only the toll rate for the user, but also check whether the user is driving in areas where his vehicle is not allowed or whether the user is exceeding the local speed limit.

Of course, since the user will be billed or fined based on the data he provides to the infrastructure operator, the user has a strong incentive to tamper with his data. For instance, the user could designate his mobile phone as the device collecting and communicating the data and could subsequently leave his mobile phone at home, such that it appears as if he does not use the road infrastructure, or the user could simply list an incorrect licence plate for his vehicle.

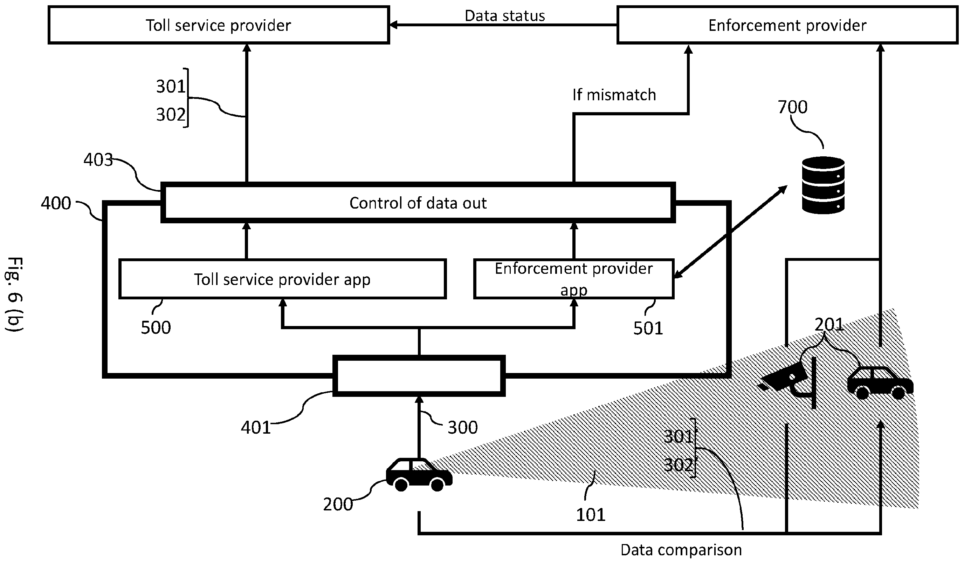

**Fig. 6 (b)** demonstrates how data tampering can be detected. The user's local device **200** broadcasts the enforcement-specific data **301'** and **302'** which is picked up by the external devices **201** within a predetermined distance **101** of the user's device **200.** Alternatively or simultaneously, the enforcement provider's application **501** compares the service-specific data in the user's secure environment **400** to corresponding anonymized records in the second cloud computing environment 700. The external devices **201** compare the received or collected enforcement-specific data **301'** and **302'** to their own observations. If the enforcement-specific data **301'** and **302'** corresponds to the observations of the external devices **201** according to a predetermined criterion, the external devices **201** can discard the enforcement-specific data. If the enforcement-specific data **301'** and **302'** does not correspond to the observations of the external devices **201** according to the predetermined criterion, the external devices **201** inform the enforcement provider. Subsequently, the enforcement provider and/or the enforcement provider's application can take measures against the user **100,** such as running additional checks or eventually informing the service provider and/or the road infrastructure operator.

For instance, if a camera-equipped external device, such as a licence plate camera, registers the passage of licence plate "XXX" but the car passing by broadcasts that his licence plate number is "XXY" as part of the enforcement-specific data, the external device can deduce that the user has tampered with his licence plate information and can pass this information, together with the correct licence plate number to the enforcement provider and/or the enforcement provider's application. As another example, if a camera-equipped external device registers the passage of a vehicle but the vehicle passing by does not broadcast any enforcement-specific data, the external device can deduce that the driver of the vehicle does not make use of the service of this (enforcement) service provider. The enforcement provider can inform the road infrastructure operator on this. Eventually such a driver can only be enforced by mandated authorities. As yet another example, an external device can compare the location that is broadcasted by a car passing by to its own location. If both locations are not within a predetermined distance of each other, the external device can deduce that the driver of the vehicle has tampered with his data by tampering with the location data of his data-collecting device and can pass this information, together with the vehicles correct location and associated timestamp to the enforcement provider and/or the enforcement provider's application.

It will be appreciated that in the given example, the required functionality is realized without violating the privacy of the user. If the user does not tamper with his data, the infrastructure provider is only aware of the price that the user is due without having any insight into the underlying whereabouts of the user. The infrastructure provider does not know when, where and for how long the user is using his service, but thanks to the enforcement provider, he has the certainty that the due price has been calculated based on correct data.

While the external devices do receive the enforcement-specific data, this does not infringe on the user's privacy for two reasons. First of all, if the user doesn't tamper with his data, the external devices discard the enforcement-specific data. Secondly, since the enforcement-specific data is limited and is only received by external devices within a predetermined distance of the user's data collecting device (and hence the user) not providing any means for aggregation of said data, this does not differ from other common forms of observation such as being seen by other people on the street.

While **Fig. 6 (a)****-(b)** do not show the presence of anonymized non-modifiable copies of records of user data, stored in a second cloud computing environment **700,** for the sake of not overloading the figure, it is very much an advantage for applications in the mobility domain when this feature is implemented as illustrated in **Fig. 5****.**

First of all, the presence of anonymized non-modifiable copies of the user data give the enforcement provider's application **501** an additional opportunity to check the plausibility and integrity of the user's data.

Secondly, the service provider does not have access to the whereabouts of individual users. However, for the purpose of infrastructure and traffic management, it would be of immense help to the infrastructure provider if he had access to traffic information on the road network. By giving the road infrastructure provider or traffic manager access to the anonymized non-modifiable copies of the appropriate data records of all the users of the road infrastructure, the infrastructure provider obtains access to a complete dataset without infringing the privacy of any of the users.

The skilled person will recognize that the collection of additional data pertaining to the user, going beyond the minimum data set mentioned above, enables even more use cases. For instance, the data **300** might comprise information on the vehicle's drivetrain (internal combustion engine, hybrid or electric), the type of fuel used, the dynamic fuel consumption, the parameters set in the motor management system, the output of the exhaust gas sensors or other data that can be read from the vehicle's data network. Based on this additional data, the road infrastructure provider's application **500** might calculate for instance an ecological-footprint-based toll rate, where the user **100** is taxed based on the true consumption and emissions of his vehicle.

Or, as the following example illustrates, the use of the system according to the present invention for the application of car insurance. Very similarly, but for a completely different business model, the service provider's application **500** can even calculate the car insurance cost for an insurer (instead of the price for using the road) for the user **100,** based on the data in the secure environment, the regulatory requirements, motor engine parameters reflecting the driving behaviour and the pricing policy of the insurance company.

The following example illustrates the use of the system according to the present invention for the application of contact tracing. Contact tracing can be a powerful tool to understand and eventually control the spread of dangerous contagious diseases, such as for instance COVID-19, but is often met with resistance by the population due to privacy concerns. The use of the present invention for contact tracing has the potential of alleviating these concerns.

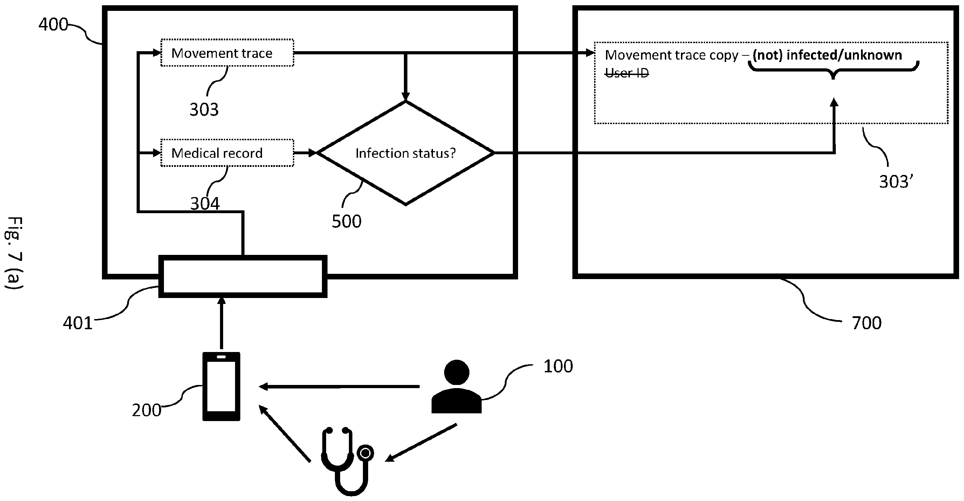

**Fig. 7 (a)** schematically illustrates the first and second steps in the use of the present invention for contact tracing applications. In the first step, a user **100** allows that one or more devices **200** register his movement trace and his medical record and subsequently send this aggregated data, by means of a secure input interface **401,** to the user's secure environment **400.** In the user's secure environment **400,** the user's movement trace is stored as a movement trace record **303** and the user's medical history is stored as a medical record **304.**

Preferably, the user's movement trace record **303** comprises the user's location and the timestamp of the moment when the user was found at this location. Preferably, the user's location is updated at least once every 5 minutes, more preferably at least once every 2 minutes, even more preferably at least once every minute, most preferably at least once every 30 seconds. Preferably, the user's location is updated at least once every 100 metres, more preferably at least once every 50 metres, even more preferably at least once every 20 metres, most preferably at least once every 10 metres. Preferably, the system is capable of adjusting the acquisition rate such that the user's location and timestamp can be sampled more frequently when the system detects that the user is moving at a rapid pace, for instance, more than 100 metres every 30 seconds, or such that the user's location and timestamp can be sampled less frequently when the system detects that the user is moving at a slow pace, for instance, less than 10 metres every 5 minutes. The skilled person is aware of suitable algorithms for modifying the acquisition rate. The skilled person will also understand that the above mentioned time and space intervals are merely suggestions and can be adapted to specific cases. For instance, when it is well known that a virus can only be transmitted from one person to another when both persons are within a distance of 1,5 metres of each other, spatial sampling with a resolution of 1,5 metres or smaller may be desirable.

Preferably, the user's medical record comprises information on whether the user is infected with a recognized dangerous contagious disease. Preferably, the user's medical record comprises the timestamp of the administration of the lab test that determined that the user is infected with a recognized dangerous contagious disease.

An anonymized non-modifiable copy **303'** of the user's movement trace record is stored in the second cloud computing environment **700,** as discussed above in the context of **Fig. 3****.**

In the second step, the user grants an application **500** permission to execute in his secure environment **400** and to access his movement trace record **303** and his medical record **304,** both stored in this environment. The application **500** scans the user's medical record for positive test results for dangerous contagious diseases. Furthermore, the application **500** accesses the movement trace record **303** to retrieve the address of the anonymized non-modifiable copy **303'** of the movement trace record. Subsequently, the application **500** retrieves the anonymized non-modifiable copy **303'** of the user's movement trace record and appends this record with the user's test results for the dangerous contagious diseases.

Preferably, the application **500** retrieves a list of dangerous infectious diseases to scan for from an officially recognized and certified database. Preferably, the application **500** also reads the timestamp of the administration of the lab tests for the respective dangerous contagious diseases. If the user **100** has recently tested positive for a dangerous contagious disease, the application **500** appends the anonymized record **303'** with a positive infection status for the specific disease. If the user **100** has recently tested negative for a dangerous contagious disease, the application **500** appends the anonymized record **303'** with a negative infection status for the specific disease. If a user **100** was not tested for a specific disease, or was only tested a long time ago, the application **500** may append the anonymized record **303'** with an unknown infection status for the specific disease. The skilled person will recognize that the specifications "recently" or "a long time ago" are relative and must be interpreted in view of the known dynamics of the specific disease. For instance, if it is generally accepted that a person will remain contagious for a duration of two weeks after being infected, then a lab test result from two months ago might be interpreted as being from a long time ago, whereas a lab test result from one week ago might be interpreted as being recent. Preferably, the application will execute periodically and update the anonymized non-modifiable copy **303'** of the user's movement trace record and appends this record with the user's test results for the dangerous contagious diseases accordingly.

Furthermore, the skilled person will understand that infections with some diseases build immunity and that therefore, a user who tested positive for a specific disease "a long time ago" might be immune to that specific disease and will therefore not spread the specific disease. Likewise, a user could be vaccinated against a specific disease and will therefore not spread the specific disease. Preferably, the application **500** takes this specific knowledge into account when appending the user's disease status to the record **303'.**

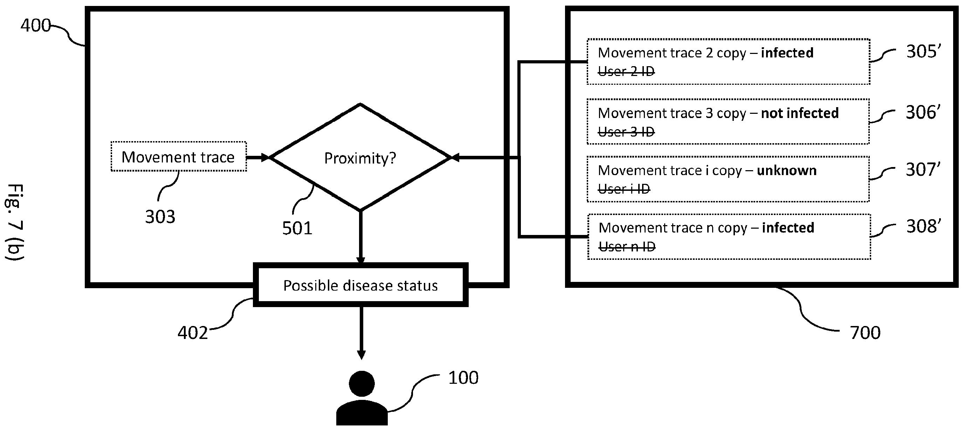

**Fig. 7 (b)** schematically illustrates the third step in the use of the present invention for contact tracing applications. At this point, the content of the second cloud computing environment **700** comprises the anonymized movement trace records with the appended disease status of all users who have agreed with the necessary steps for using the invention for contact tracing purposes. Preferably, the content of the second cloud computing environment **700** comprises the anonymized movement trace records with the appended disease status of a significant part of the population. This might be achieved for instance by legally obliging all users of the system according to the invention to enable the contact tracing application. In this case, it is an advantage that the second cloud computing environment **700** essentially comprises a database of the movement traces of contagious people. It is an additional advantage that this database does not raise privacy concerns with the users or does not violate personal data regulations since the data in the second cloud computing environment is anonymized.

In the third step, the user **100** grants an application **501** permission to execute in his secure environment **400** and to access his movement trace record **303** stored in this environment. The application **501** compares the user's movement trace record **303** with the anonymized movement trace records stored in the second cloud computing environment **700.** Preferably, the application **501** only compares the user's movement trace record **303** with the anonymized movement trace records comprising a positive disease status for a dangerous contagious disease. In the case of **Fig. 7(b)****,** the application **501** thus compares the user's movement trace record **303** to the copies with a positive disease status **305'** and **308',** but not to the copy with the negative disease status **306'** or to the copy with the unknown disease status **307'.**
In the case of overlap according to a predetermined criterion between the user's movement trace and the movement trace of a person infected with a dangerous contagious disease, the application **501** warns the user **100** through the user interface **402.** The user **100** might then be recommended to undergo a lab test for the specific disease.

The skilled person understands that the overlap criterion can be determined on a per-disease or situational basis. For instance, some diseases might spread over a larger distance than others because they are transmitted through a different mechanism. Likewise, some viruses or bacteria might survive much longer on commonly touched surfaces such as door knobs. Even more, the transmission of some infectious diseases might depend on climatological conditions such as temperature or relative humidity or on the environment, with some disease spreading much more easily in swimming pools or public shower facilities. Preferably, the algorithm embedded in the application **501** takes this specific knowledge into account.

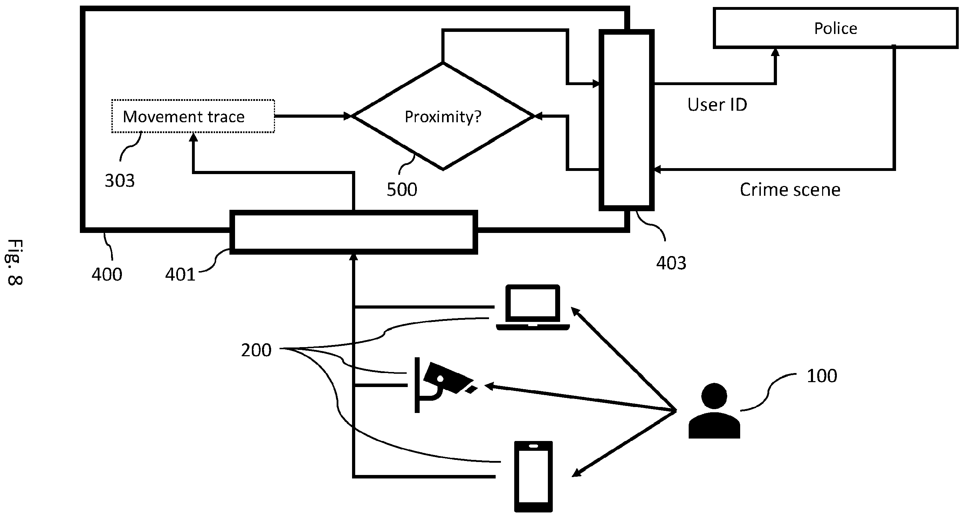

A use case that is closely related to contact tracing is the tracing of possible crime suspects. **Fig. 8** schematically illustrates the use of the present invention for the application of tracing possible crime suspects. For this application, a user **100** must first allow that one or more devices **200** register his movement trace and subsequently send this aggregated data, by means of a secure input interface **401,** to the user's secure environment **400.** In the user's secure environment **400,** the user's movement trace is stored as a movement trace record **303.** A more detailed description of the acquisition of a movement trace has been given above in the context of **Fig. 7 (a)****.**

When an agency charged with crime investigation, such as for instance a police department, has determined the location, time and date of a crime for which the perpetrator is not known yet, the agency can transmit this information through the API **403** to the secure environment **400** of the user.
Subsequently, the user **100** needs to grant an application **500** permission to execute in his secure environment **400** and to access his movement trace record **300.** Preferably, the application **500** is a certified application originating from a government agency. Preferably, the user **100** is legally obliged to grant the application **500** permission to install and execute in his secure environment, to access his movement trace and to communicate his identity to the crime investigation agency.

The application **500** compares the user's movement trace to the location, date and time of the crime. If overlap between the user's movement trace and the crime scene is detected according to a predetermined criterion, the application transmits this information, together with the user's identity, to the crime investigation agency, without requiring the user's further consent. This agency can then add the user to the list of possible suspects. Preferably, if no overlap is detected and the user **100** is not on the crime suspect list yet, the application **500** does not send any information to the crime investigation agency. Preferably, if no overlap is detected and the user **100** is already on the crime suspect list, the application **500** does send the information to the crime investigation agency. This agency can then remove the user from the list of possible suspects. Preferably, the crime investigation agency can determine the overlap criterion a case-by-case basis, thereby accounting for the uncertainty in the estimated location, time and date of the crime under investigation.

Since crime perpetrators have a very strong incentive to tamper with their data, the use of the invention for the tracing of crime suspects as described above is preferably combined with the enforcement methods as described in the context of **Fig. 5****,** **Fig. 6 (a)** **and** **Fig. 6 (b)****.**

Electronic governance or e-governance is the application of IT for delivering government services to citizens and businesses. Through e-governance, government services can be made available in a convenient, efficient, and transparent manner. In order to do so, a government may need to gather, store and have insight in the personal data of the natural and legal persons residing in its jurisdiction. This holds especially true for the example of the calculation and enforcement of tax rates, tax incentives and the distribution of government benefits. On one hand citizens and companies have a strong incentive to tamper with their tax filings in order to pay lower taxes. On the other hand tax schemes are often complex and many citizens inadvertently commit errors in their tax filings. Finally, the disadvantaged are often not aware of the government benefits they are entitled to. To remedy these drawbacks, a government agency would need detailed insight into the finances of all natural and legal persons residing in its jurisdiction. However, this constitutes a massive privacy infringement, leads to the generation of databases that can be abused and requires a very substantial amount of manpower or infrastructure investment to enable the required data collection and processing.

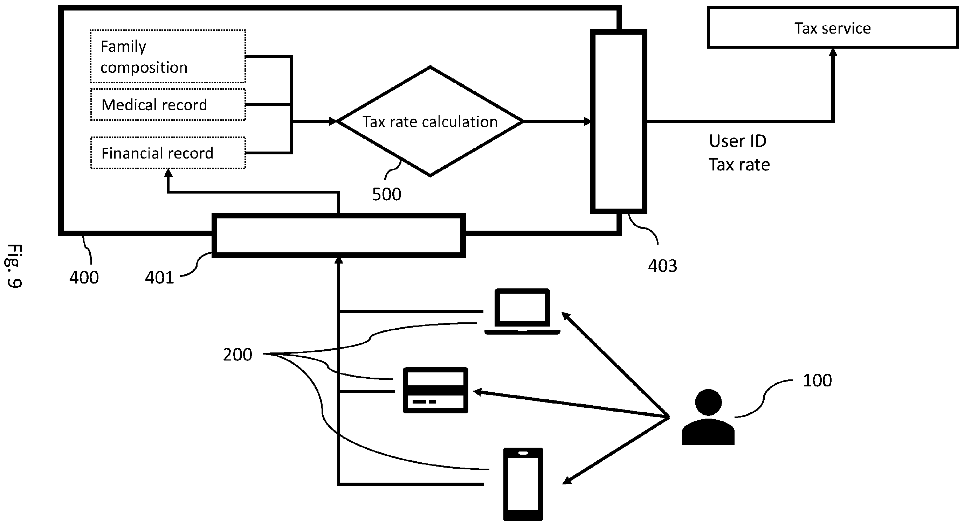

**Fig. 9** schematically illustrates the use of the present invention for the calculation of tax rates. In a first step, the user **100** is requested to enable devices **200** to communicate all personal data that is relevant for taxation purposes to his secure environment **400** through the secure input interface **401.** This data may comprise for instance data on financial transactions, financial records, investments, real estate ownership, medical records and family composition of the user **100.** The devices **200** may comprise devices adapted for personal identification or for executing financial transactions such as for instance ATMs, personal computers, smart phones and card readers. Preferably, the devices **200** discard all personal data after this data has been stored in the secure environment **400.** Preferably, anonymized non-modifiable copies of the personal data are stored in a second cloud computing environment (not shown in **Fig. 9**) in accordance with the embodiment discussed in the context of **Fig. 3****.**

In a second step, the user **100** is requested to enable the installation and execution of an application **500,** adapted for calculating tax rates based on personal data, in his secure environment **400.** Preferably, the application **500** is a certified application. Preferably, the application **500** is made available by an official government agency. Upon execution, the application **500** checks whether the secure environment **400** comprises all the data necessary for tax rate calculation. In order to do so, the application **500** may consult external databases through the API **403.** While consulting the external databases, the application **500** does not transmit any data from the secure environment **400** of the user **100** to the external database. Preferably, if the application **500** detects that necessary data is missing from the secure environment **400,** the application offers the user **100** the opportunity to manually enter or import the necessary data. Preferably, if the application **500** detects that a data record in the secure environment does not agree with the corresponding data record in a consulted external database, the application offers the user **100** the opportunity to manually correct the erroneous record.

Once the application **500** has access to the necessary records in the secure environment **400,** it calculates the tax rate for the user **100** and transmits the calculated tax rate, together with the user's **100** unique user ID, through the API **403** to the competent authority.
Since taxpayers have a very strong incentive to tamper with their data, the use of the invention for the calculation of tax rates as described above is preferably combined with the enforcement methods as described in the context of **Fig. 5****,** **Fig. 6 (a)** **and** **Fig. 6 (b)****.** If the enforcement provider detects that the user **100** attempts to manipulate his data, for instance by prohibiting the transmission of certain required data to the personal environment **400,** or by changing or deleting data in the personal environment **400,** the enforcement provider informs the competent authority. Optionally, the enforcement provider could also be tasked with checking and/or validating the required data against data from external databases, as described above.

In yet another application, the present invention can be used to aggregate, store and process data generated by loT devices, such as for instance in the application of smart metering of utilities consumption. In current practice, the utility company installs a smart meter at the grid access point of the consumer, such as for instance a private household or business. This smart meter registers the consumer's timestamped consumption and periodically transmits the registered consumption to the utility company. This implementation raises multiple concerns and is faced with adversity by many people. Since the meter registers and transmits the timestamped consumption, and since the registration process can happen as often as once every few minutes, the utility company can deduce the consumer's behaviour from the data, such as for instance when people are home, when they are cooking or when they are taking a shower. Many people feel as if this level of insight into their behaviour infringes on their privacy. Moreover, when this data is stolen, it can be abused for malicious means such as the planning of burglary or home invasion. Additionally, if the utility company wishes to update its metering policy, it is forced to update the firmware of all smart meters.

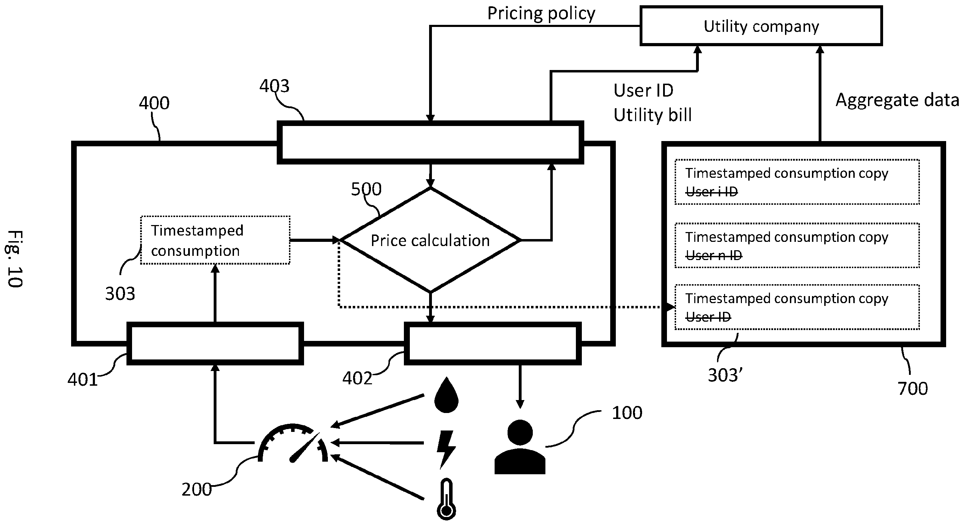

These drawbacks can be removed through the use of the present invention for smart metering of utilities consumption, as schematically illustrated in **Fig 10****.** When using the present invention, the utility company installs a meter **200** at the grid access point of the user, in this context more aptly named consumer, **100,** in accordance with current practice. Preferably, the meter **200** is adapted to register the consumption of one or more of electricity, water, gas, heat or data volume. Multiple meters may be installed, each of the meters adapted to register the consumption of one or more specific utilities. Each of the multiple meters may be installed by a separate utility company. Preferably, the meter **200** registers the consumer's timestamped consumption. The meter **200** comprises appropriate networking means, adapted to send data to the secure input interface **401** of the consumer's secure environment **400.**

The consumer **100** is required to enable the reception and storage of his timestamped consumption data **303,** generated by his meter **200,** in his secure environment **400.** The consumer **100** is also required to enable the installation and execution of a price calculation application **500** in his secure environment **400.** Preferably, the price calculation application **500** is a certified application. Based on the consumption data **303** in the secure environment, the price calculation application **500** periodically calculates the consumer's utility bill and transmits the due amount, together with the consumer's user ID, to the utility company using the secure environment's API **403.** The underlying consumption data **303** is not communicated to the utility company. If the utility company updates its pricing policy, pricing can be adapted through an update of the price calculation application **500.** The consumer **100** can check his consumption data **303** and his utility bill through the user interface **402.**

For each consumer, an anonymized copy **303'** of his consumption record **303** is stored in a second cloud computing environment **700,** in accordance with the embodiment discussed in the context of **Fig. 3****.** The utility company has full insight into all of the anonymized records in the second environment **700.**

Since consumers have a very strong incentive to tamper with their data, the use of the invention for smart metering as described above is preferably combined with the enforcement methods as described in the context of **Fig. 5****,** **Fig. 6 (a)** **and** **Fig. 6 (b)****.** If the enforcement provider detects that the consumer **100** attempts to manipulate his data, for instance by prohibiting the transmission of a subset of data from the meter **200** to the personal environment **400,** or by changing or deleting consumption data **303** in the personal environment **400,** the enforcement provider informs the competent authority.

The use of the invention for smart metering as described above offers many advantages over the traditional approach. Since the utility company does not have insight into the personal consumption data **303** of the consumer **100,** there is no infringement of the consumer's privacy and as the data in the second environment **700** is anonymized, it cannot be exploited for the planning of burglaries or home invasions. Moreover, these advantages can be largely realized with existing infrastructure and without losing any of the advantages of traditional smart metering. Through the presence of the anonymized consumption records in the second environment **700,** the utility company has complete insight into the utility demand patterns and the usage of its infrastructure. And through the application **500,** the utility company can implement pricing schemes of arbitrary complexity such as for instance spot-pricing, progressive consumption-based pricing or power-consumption dependent pricing. Finally, the consumer **100** can monitor his consumption from any personal device through the user interface **402.**

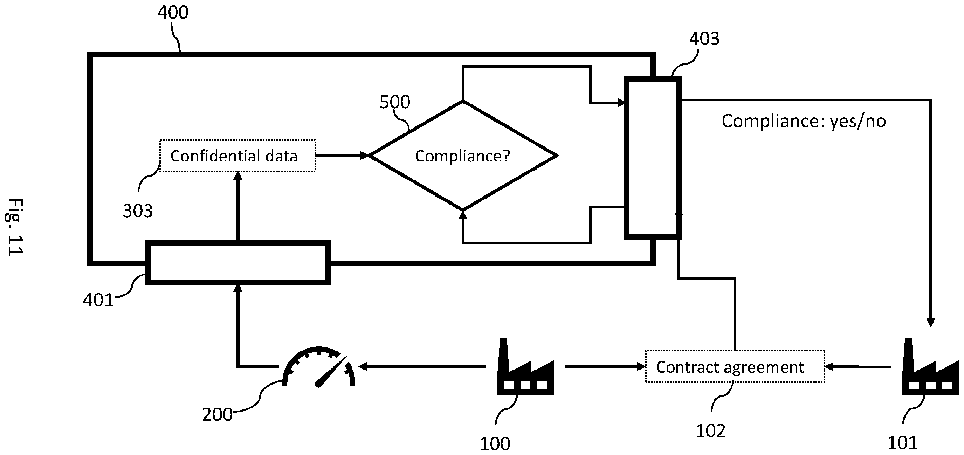

In yet another application, the present invention can be used for checking the compliance with contract agreements in a business-to-business (B2B) context, without disclosing company-sensitive data, as schematically illustrated in **Fig. 11****.** A first business **100** comes to a contract agreement **102** with a second business **101.** The second business **101** wants to check whether the first business complies with the specifications of the contract agreement **102.** However, in order to so, the second business **101** would require insight into confidential data of business **100,** which is not desirable.

The use of the present invention can solve this dilemma. As a first step, the first business **100** enables the one or more devices **200** to register confidential data **303** relevant to the contract agreement **102,** and to communicate this data through the secure input interface **401** to its secure environment **400** where it is stored. The confidential data **303** could comprise for instance sensor data collected during the manufacturing process or storage of physical products.

As a second step, the second business **100** enables the installation and execution of a compliance-checking application **500** in its secure environment **400.** The compliance-checking application **500** has access to all the data in the secure environment **400** and compares the relevant data to the specifications of the contract agreement **102.** The application **500** may for instance monitor whether specific manufacturing or storage parameters remain within the specifications as agreed to in the contract, or whether billed costs are justified according to the available data.

Subsequently, the application **500** communicates through the API **403** to the second business **101** whether the first business **100** complies with the contract agreements or not. Preferably, the application **500** also communicates where and how the first business **100** deviates from the contract agreements. It is important to note that the second business **101** does not require any insight whatsoever into the internal data of the first business **100.** The skilled person will understand that this example can be extended to a situation with more than two parties to the contract, or to a situation where the compliance check is bilateral or multilateral instead of unilateral.

## Claims

1. A system for storing and processing data (300) pertaining to a user (100), said system comprising:
- one or more devices (200) for generating said data (300);
- a secure input interface (401) for receiving said data (300);
- a secure environment (400) for storing said data (300) received through said input interface (401); said secure environment (400) being configured to host one or more applications (500) to process said data (300) in said secure environment (400);
- a processor configured to execute said one or more applications (500) to process said data (300) in said secure environment (400);
- an application programming interface (403) of said secure environment (400) that enables the installation of said one or more applications (500) in said secure environment (400); said application programming interface (403) enabling said one or more applications (500) to send a subset of said data (301) and/or processed data (302), derived from said data (300), to outside said secure environment (400); and
- a management application (402) that enables said user (100) to control which subset (301) of said data (300) or which processed data (302), derived from said data (300), can be sent to outside said secure environment (400) by said one or more applications (500).

2. The system according to claim 1, wherein said management application (402) further enables said user (100) to perform one or more of:
- controlling if and when said data (300), generated by said one or more devices (200), can be received through said input interface (401) and stored in said secure environment (400);
- viewing said data (300);
- deleting said data (300) partially or completely;
- controlling if and when said one or more applications (500) can be installed in said secure environment (400);
- controlling if and when said one or more applications (500) can process said data (300) in said secure environment (400);
- controlling if and when said one or more applications (500) can send said subset (301) of said data (300) and/or said processed data (302), derived from said data (300), to outside said secure environment (400);
- uninstalling said one or more applications (500) from said secure environment (400).

3. The system according to claim 1 or claim 2, wherein said one or more devices (200) comprise a personal device of said user (100).

4. The system according to any of claims 1 to 3, wherein said secure environment (400) is located in a first cloud-computing environment.

5. The system according to any of claims 1 to 4, further comprising an interface (404) to a second cloud computing environment (700) for the storage of an anonymized non-modifiable copy (303') of a record (303) of said data (300).

6. The system according to any of claims 1 to 5, further comprising means to communicate a subset (301') of said data (300) and/or processed data (302'), derived from said data (300), to said one or more external devices (201) when said user (100) is located within a predetermined distance of said one or more external devices (201).

7. A method for storing and processing data (300) pertaining to a user (100), said method comprising:
- collecting said data (300) pertaining to said user (100);
- storing said data (300) in a secure environment (400);
- executing one or more applications (500) to process said data (300) in said secure environment (400);
- providing an application programming interface (403) of said secure environment (400) to enable said one or more applications (500) to be installed in said secure environment (400), to enable said one or more applications (500) to send a subset (301) of said data (300) and/or processed data (302), derived from said data (300), to outside said secure environment (400); and
- providing a management application (402) enabling said user (100) to control which subset (301) of said data (300) and/or which processed data (302), derived from said data (300) can be sent to outside said secure environment (400) by said one or more applications (500).

8. The method according to claim 7, wherein said management application (402) further enables said user (100) to perform one or more of:
- controlling if and when said data (300) can be stored in said secure environment (400);
- viewing said data (300);
- deleting said data (300) partially or completely;
- controlling if and when said one or more applications (500) can be installed in said secure environment (400);
- controlling if and when said one or more applications (500) can process said data (300) in said secure environment (400);
- controlling if and when said one or more applications (500) can send said subset (301) of said data (300) and/or said processed data (302), derived from said data (300), to outside said secure environment (400);
- uninstalling said one or more applications (500) from said secure environment (500).

9. The method according to claims 7 or 8, wherein said collecting of said data (300) is done by a personal device of said user (100).

10. The method according to any of claims 7 to 9, wherein an anonymized non-modifiable copy (303') of a record (303) of said data (300) is stored in a second cloud-computing environment (700) and wherein the address of said anonymized non-modifiable copy (303') is appended to said record (303) of said data (300).

11. The method according to claim 10, wherein said one or more applications (500) can compare said record (303) of said data (300) to the anonymized non-modifiable copies of one or more records.

12. The method according to claim 11, wherein the anonymized non-modifiable copies can be made available to a third party without consent of said user (100).

13. The method according to any of claims 7-12, wherein an enforcement provider can compare one or more records (301', 302') of said data (300) pertaining to said user (100), said one or more records (301', 302') being communicated to one or more external devices (201) for the time period during which said user (100) is located within a predetermined distance of said one or more external devices (201), with data generated by said external devices (201).

14. The method according to any of claims 7-13, adapted to allow said user (100) to access a service provided by a service provider, the method further comprising:
- granting an application (500) of a service provider permission to be installed in said secure environment (400), to execute in said secure environment (400) and to send a service-specific subset (301) of said data (300) and/or service-specific processed data (302), derived from said data (300), to said service provider.

15. The method according to claim 14, adapted to allow submission of said user (100) to an enforcement policy, the method further comprising:
- granting a personal device of said user (100) permission to send an enforcement-specific subset (301') of said data (300) and/or enforcement-specific processed data (302'), derived from said data (302), to said external devices (201).
